# EUROPEAN PATENT SPECIFICATION

(11) **EP 2 956 757 B1**
(45) Date of publication and mention of the grant of the patent: **02.10.2019**
(21) Application number: 14705390.4
(22) Date of filing: 10.02.2014
(51) Int. Cl.: G01N 15/02, G01N 15/14, G01N 33/36

(54) **IMPROVED APPARATUS AND METHOD FOR DETECTION OF ASBESTOS FIBRES**
VERBESSERTE VORRICHTUNG UND VERFAHREN ZUR ERKENNUNG EINER ASBESTFASER
APPAREIL ET PROCÉDÉ AMÉLIORÉS POUR LA TECHNOLOGIE DE DÉTECTION DE FIBRES D'AMIANTE

(30) Priority: 15.02.2013 GB 201302638
(43) Date of publication of application: 23.12.2015
(73) Proprietor: Alert Technology Ltd, Yalberton Industrial Estate Paignton Devon TQ4 7QR (GB)
(72) Inventor: KAYE, Paul, Hatfield Hertfordshire AL10 9AB (GB); HIRST, Edwin, Hatfield Hertfordshire AL10 9AB (GB); STOPFORD, Christopher, Hatfield Hertfordshire AL10 9AB (GB); GREENAWAY, Richard, Hatfield Hertfordshire AL10 9AB (GB); STANLEY, Warren, Hatfield Hertfordshire AL10 9AB (GB)
(74) Representative: CSY Herts
(86) International application number: PCT/GB2014/050381
(87) International publication number: WO 2014/125257

(56) References cited:
- GB-A- 2 283 316
- GB-A- 2 333 835
- US-A- 4 940 327
- US-A- 6 005 662
- US-A1- 2010 252 781
- US-B1- 6 606 157

## Description

### Field of the Invention

The present invention relates to an apparatus for the detection of airborne particles. It is particularly applicable, but in no way limited, to the detection and discrimination of asbestos fibres from other types of fibres using magnetic fields. In particular, the invention allows for real-time detection of asbestos in an ambient environment.

### Background to the Invention

The in-situ detection of potentially hazardous respirable fibres has become a growing concern as the health risks associated with these fibres have become more fully understood. The most commonly encountered hazardous fibres are of asbestos materials which, despite a widespread ban on their use for many years, are still present in vast quantities in buildings and industrial plants throughout the world. The most abundant type of asbestos, chrysotile (or white) asbestos, is present in over 95% of these installations. The second most commonly found variety is crocidolite (or blue) asbestos, with amosite (or brown) asbestos being a third, rarer form. Crocidolite and amosite belong to the amphibole class and are characterised by the fine, straight, needle-like fibres produced when the material is fragmented. Chrysotile asbestos belongs to the serpentine class of minerals and is characterised by a natural curvature in the fibres it produces. All three materials produce fibres which are capable of penetrating deep into the lungs and which, because of their shape, become entrapped there. Crocidolite and amosite fibres are known to be far more carcinogenic than those of chrysotile asbestos, and though the exact reasons for this are still not fully understood, the persistence of the fibres in the lung (a function of the body's ability to chemically dissolve the fibres) is believed to play a major role, since this may be measured in decades for amphibole fibres compared to months for chrysotile fibres.

Airborne asbestos fibre is therefore a significant health hazard. Peto *et al*., for example, (J Peto, J T Hodgson, F E Matthews and J R Jones, The Lancet 345, March 4, pp. 535-539, 1995) highlight the continuing increase in mesothelioma mortality in Britain as a result of respirable asbestos fibres generated during clearance operations or routine building maintenance work. The unambiguous confirmation of the presence of airborne asbestos fibres within an occupational environment can normally only be achieved by the use of filter cassette sampling of airborne particles followed by electron microscopy and, to determine chemical identity, a technique such as energy dispersive X-ray analysis. These processes are laborious and expensive to perform, and perhaps most importantly, provide results only many hours after the sample acquisition and possible personnel exposure has occurred. Several attempts have therefore been made to address methods by which real-time or in-situ detection of airborne asbestos may be achieved.

Rood *et al* (A P Rood, E J Walker and D Moore, Proc. Int. Sym. Clean Air at Work. Luxembourg, Royal Soc. Of Chem. pp.265-267, 1991) for example, have described a low cost portable fibre monitor developed at the UK Health & Safety Executive laboratories. This device is based on the differential light scattering produced by fibrous particles which are deposited electrostatically in uniform alignment onto a glass substrate. The device is capable of detecting fibrous particles but is not designed to detect individual particles, relying on the summation of scattering signals from a substantial number of deposited fibres in order to achieve a detectable signal. More importantly, the device cannot discriminate between asbestos fibres and other less harmful fibres such as those of glass, gypsum, or mineral wool. Rood states that the UK clearance limit for asbestos in buildings of 10 fibres per litre of air can be detected after about 300 minutes sampling time. This does not therefore constitute a real-time detection technique.

Another example is the comparatively widely used M7400AD Real-time Fibre Monitor (MSP Corp., Shoreview, MN) originally developed originally by Lilienfeld *et al*. (P Lilienfeld, P Elterman and P Baron, Am. Ind. Hyg. Assoc. J. 40, pp.270-282, 1979). This instrument draws air containing particles through a laser scattering chamber that is enveloped by a quadruple electrode arrangement. It achieves fiber detection by aligning the fibers in an oscillating electric field, illuminating the fibers with the beam from a laser and detecting the resulting oscillatory scattered light with a photomultiplier. The characteristic frequency, phase and shape of the pulses enable discrimination between the fibers of interest and other non-fibrous particles.

The Fibrecheck FC-2 (SMH Products Ltd., U.K.) is another light scattering instrument designed to detect fibrous particles in an ambient airflow. Again, discrimination between fibrous and non-fibrous particles is achieved by using several discrete detectors to measure the distribution of laser light scattered by the particles. The performance of the Fibrecheck and FM7400 (a precursor to the M7400) instruments were compared by Kauffer et al. (E. Kauffer, P. Martin, M. Grzebyk, M. Villa and J. C. Vigneron, Ann. Occup. Hyg. 47, 5, 413-426, 2003).

However, while the above instruments are valuable tools for determining the presence of airborne fibres (and most fibres carry some risk by inhalation) none are capable of discriminating between asbestos and non-asbestos fibres. Indeed, to date, there has been no unambiguous method for the real-time in situ detection of airborne asbestos fibres.

A technique that allows a limited degree of discrimination between asbestos and non-asbestos fibres and between different types of asbestos is based on real-time analysis of spatial light scatting patterns produced by individual particles in flow as described in GB 9718675.3 (University of Hertfordshire). This represents the closest prior art known to the applicants. The patterns contain information on morphological characteristics of the particles, allowing classification of detected particles into several categories. In order to allow sufficiently fast data processing, detection of the spatial patterns is accomplished using segmented ring detector arrays containing typically 16 segments per ring (see P H Kaye, E Hirst and Z Wang-Thomas, Applied Optics 36, pp. 6149-6156, 1997). However, even the best currently available detection techniques based on particle morphology do not allow unambiguous detection of asbestos, with categorisation results being much less clear than for the fibrous vs. non-fibrous particle case. For example, thin fibres of glass or some man-made mineral fibres could again be erroneously classified as crocidolite and curved fibres could be misinterpreted as chrysotile, leading to "false positive" identification.

Such ambiguity could be overcome by the use of a method that is sensitive to a property unique to asbestos fibres. Magnetic alignment was first applied to studying asbestos by Timbrell (see e.g. V Timbrell, J. Appl. Physics 43, pp.4839-4840, 1972), with further work done by Riis *et al.* and Willey. In all that research, the response of asbestos fibres to magnetic fields was used for the alignment of ensembles of fibres in small quantities of liquids, followed by an examination of stationary samples under a microscope or using light scattering. Most asbestos fibre types were found to be aligned with their long axis parallel to the direction of the magnetic field. However, some types, such as amosite can contain mixtures of fibres, some of which align parallel, while others perpendicular to the field. Despite fairly extensive previous work the mechanism by which asbestos fibres are aligned in magnetic fields remained unclear. It was variously suggested that the alignment was due to: magnetite particles in the chrysotile fibres and "the presence of paramagnetism in the direction of the fibre axis" or normal to the axis amphibole asbestos (V Timbrell, Ann. Occupational Hygiene 18, pp.299-311, 1975) and anisotropy of magnetic susceptibility (P Riis and E J Chatfield, NBS Special Publication 619, Proc. NBS/EPA Asbestos Standards Workshop. pp.108-120, 1982). Also, the existence of a permanent magnetic moment was implied (R J Willey, IEEE Trans. Magnetics 18, pp.1794-1795, 1982). Theoretical analysis of the torque experienced by asbestos fibres in a magnetic field indicates that the maximum torque would be achieved when the angle between the fibres and the field was 45°, and that the torque would fall to zero when the angle between the fibres and the field was either 0°or 90°.

Glassy fibres do not exhibit magnetic properties similar to those of asbestos unless they contain high levels of ferromagnetic impurities, such as iron compounds, which would be extremely unusual. Some crystalline fibres such as carbon fibre can show magnetic anisotropy similar to that of asbestos. However, the occurrence in the ambient environment of carbon fibre is vanishingly small compared to that of asbestos. Therefore, the measurement of fibre alignment in magnetic fields potentially offers a method of unambiguous detection of asbestos particles.

Early methods of asbestos analysis based on magnetic alignment were limited to characterisation of stationary (deposited) samples, usually in liquid, whereby predominant orientation angles of fibres or orientation angle distributions were determined. Also, relatively large numbers of fibres were required to produce a meaningful result. Therefore, the methods were not suitable for real-time asbestos detection and monitoring.

A further method was proposed by Lilienfeld ("Method and apparatus for real-time asbestos monitoring", US Patent 4,940,327, July 1990). The system closely resembles the FAM series fibre monitors, except that it incorporates a magnetic as well as an electric field region. All fibrous particles carried in a sample airflow are first aligned by an electric field and then pass into a second region where a time varying magnetic field periodically changes direction to cause asbestos fibres passing through it to rhythmically tilt in time with the field (non-asbestos fibres would not show such behaviour). Multiple fibres are illuminated by a laser beam propagating along the direction of the flow and scattering from these oscillating fibres produces flashes of light onto a detector placed alongside the beam. The strength of the light flashes is broadly proportional to the number of asbestos fibres present. The path of the fibres through the magnetic field must be relatively long to allow them to re-orientate themselves several times so that a periodic signal can be detected. Importantly, this system has a number of disadvantages, the most serious ones being as follows. Strong, time-varying magnetic fields must be produced in a large volume, requiring substantial amounts of electric power to operate the system, with consequent reduction in portability. Sensitive detection circuits have to be positioned in proximity to the magnetic field, leading to interference, particularly so because the frequency of the field coincides with the frequency of the signal which needs to be detected. As a consequence of a relatively large sensing volume and long particle transmit time (required to observe several cycles of fibre oscillation) the particle throughput of the system would be very low and sampling times at low fibre concentrations would be excessively high. These disadvantages seriously limit the potential for practical exploitation of the system. In fact, no production models have been made available during the decade since US 4,940,327 was first filed. This would indicate that the method is just not workable, possibly for the reasons outlined above.

GB 2333835 (Kaye et al) describes one example of a method and apparatus that employs the use of magnetic fields which are both non-parallel and non-perpendicular to the direction of the particle stream in the detection of asbestos fibres.

Despite extensive attempts to develop a real-time asbestos detection technique and despite the previous research into magnetic alignment of asbestos fibres, the need for an accurate practicable real-time low cost detection method for airborne asbestos has not yet been satisfied.

### Summary of the Invention

According to a first aspect of the invention, there is provided a fibre detector assembly comprising:-
(i) a scattering chamber body;
(ii) means for drawing particles through said body chamber in the form of a particle stream, said means being adapted such that the particles tend to travel in single file with the longitudinal axis of particles with elongate shape substantially aligned with the direction of the flow;
(iii) means for illuminating the particle stream within the chamber body;
(iv) an optical detector adapted to intercept and collect a portion of the light scattered by particles passing through the illuminating beam;
(v) data processing means adapted to capture and process the signals from the optical detector;
wherein the apparatus further comprises a single pair of permanent magnets for applying a magnetic field across the particle stream, the magnetic field lines of the magnetic field being perpendicular to the direction of the particle stream, and wherein the single pair of permanent magnets generates, in use, a constant magnetic field.

Since only asbestos fibres will re-orientate in the magnetic field, this arrangement greatly increases the accuracy of the instrument by virtually eliminating false positive readings. It has been discovered that an improvement in asbestos detection sensitivity can be achieved by placing the magnetic field at substantially 90° to the particle stream rather than 45° as previously thought. This is counter-intuitive given that asbestos fibres experience the greatest torque when aligned at 45° to the magnetic field. The greater sensitivity achieved by placing the magnetic field at substantially 90° is due to the overriding increase of the magnetic field strength resulting from the closer placement of the magnets to each other used to create the magnetic field without causing disruption of the particle stream therebetween and the fact that in any event the majority of the fibres will enter the magnetic field region with a slightly off-vertical alignment.

Preferably, the assembly is further adapted to collect a portion of the scattered light scattered by particles at the region of entry of the particle stream into the magnetic field and from another region located where the stream has crossed a substantial part of the magnetic field.

Preferably the scattered light is detected by at least two optical detectors.

Preferably the illuminating means comprises at least two beams of light.

Preferably the beams are derived from a single beam by means of reflection after the single beam has passed the particle stream. In an alternative the beams may be completely separately produced and are not derived from a single beam.

Preferably the portions of the light scattered by the particles are collected by one optical element and directed towards separate optical detectors.

Preferably the portions of the light scattered by the particles are collected by separate optical elements and directed towards separate optical detectors.

Preferably the scattered light passes through an aperture before reaching the optical detector(s).

The magnetic field means generates, in use, a substantially constant magnetic field.

In one alternative, the detector comprises one or more concentric annular rings of detector elements. Preferably there are a plurality of annular rings, the first or innermost annular ring comprises a single detector and the second and any subsequent annular rings each consist of a plurality of detector elements. Preferably the radial interfaces between detector elements in adjacent annular rings are out of phase. Preferably the optical detector comprises three annular rings and the two outermost rings are divided into multiple elements. Preferably the annular rings of detector elements in the optical detector are substantially circular.

In an alternative the optical detector comprises a linear detector array. Preferably the optical detector comprises dual linear detector arrays. Preferably the linear detector array comprises a linear CMOS detector array.

Preferably the assembly further comprises a trigger detector configured to activate the optical detector when the trigger detector detects light has been scattered by the particles passing through the illuminating beam.

Preferably the assembly further comprises a means for providing a sheath of particle free air around the particle stream.

Preferably the dual linear detector arrays comprise dual linear CMOS (complementary metal-oxide-semiconductor) detector arrays.

The use of dual linear CMOS detector arrays provides many advantages over radial arrays or photodiodes. Firstly such linear CMOS detector arrays are a standard consumer electronic products found in items such as barcode scanners, and as such provides for a low cost alternative to radial arrays or photodiodes. Secondly, such linear CMOS detector arrays are provided with all the necessary electronic circuitry on board to both amplify and clock out the data, whereas in the case of radial arrays or photodiodes external electronics are required which significantly adds to the cost. Thirdly, such linear CMOS detector arrays are of much higher resolution than radial arrays or photodiodes. To provide a comparison, linear CMOS detector arrays typically have 512 pixels, whereas radial arrays and photodiodes typically have up to the order of 64 pixels. The higher resolution enables very small scattering differences to be detected between asbestos fibres and most other fibres such as glass or cotton.

### Brief Description of the Drawings

Preferred embodiments of the present invention will now be more particularly described by way of example only with reference to the accompanying drawings, wherein:
Figure 1 illustrates an asbestos detection apparatus that uses a single beam and dual linear detector arrays that does not form part of the present invention;
Figure 2a illustrates experimental CMOS array data for a fibre that does not form part of the present invention;
Figure 2b illustrates experimental CMOS array data for a water droplet that does not form part of the present invention;
Figure 2c illustrates experimental CMOS array data for an irregular shaped silica dust grain that does not form part of the present invention;
Figure 3 illustrates experimental data recorded from an aerosol of crocidolite asbestos fibres with and without the influence of a magnetic field that does not form part of the present invention;
Figure 4 illustrates an asbestos detection apparatus that uses a dual beam and dual linear detector arrays that does not form part of the present invention;
Figure 5 illustrates experimental data recorded from a dual beam asbestos detection apparatus for the change in angle of gypsum and crocidolite asbestos fibres after application of a magnetic field that does not form part of the present invention;
Figure 6 illustrates an asbestos detection apparatus that uses a single beam, magnetic field at 90° and a radial detector array according to the present invention;
Figure 7 illustrates an asbestos detection apparatus that uses a single beam, magnetic field at 90° and dual linear detector arrays according to the present invention;
Figure 8 illustrates an asbestos detection apparatus that uses a dual beam, magnetic field at 90° and a radial detector array according to the present invention; and
Figure 9 illustrates an asbestos detection apparatus that uses a dual beam, magnetic field at 90° and dual linear detector arrays according to the present invention.

### Description of the Preferred Embodiments

The present embodiments represent currently the best ways known to the applicant of putting the invention into practice. But they are not the only ways in which this can be achieved. They are illustrated, and they will now be described, by way of example only.

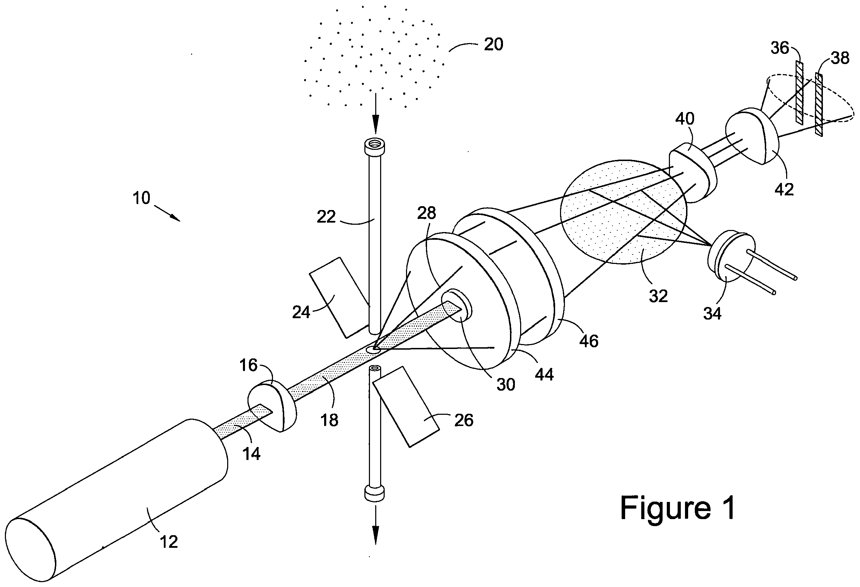

Figure 1 illustrates an asbestos detection apparatus 10 that uses a single beam that does not form part of the present invention.

The beam 14 from a 30 mW 658 nm diode laser module 12 (Prophotonix Inc., Salem, NH) is focused using a lens 16 to an elliptical cross-section 18, approximately 3 mm wide and 0.1 mm deep, at the intersection with a sample airflow carrying suspended particles 20 from the ambient environment. The parabolic laminar flow-profile set up within the stainless steel tube 22 carrying this airflow has the effect of preferentially aligning elongated particles, such as fibres, axially with the flow. Set immediately above the intersection of beam and airflow are two high-strength N48 neodymium magnets 24, 26 (6 mm diameter 13 mm length), arranged such that the field between them is at 45° to the axis of the airflow.

Light 28 scattered by the particle in the forward direction at scattering angles between 5° and 20° to the beam axis is collected by a first lens 40 and a second lens 42, with the main laser beam 18 being absorbed by a beam-dump 30 as shown. About 8% of the collected scattered light is reflected by a pellicle beam-splitter 32 onto a photodiode detector 34. The amplified signal from this detector 34 is used both to assess particle size and to act as a 'particle detection' trigger for the subsequent system electronics. The transmitted portion of the scattered light falls onto two linear 512 pixel CMOS arrays 36, 38 (Hamamatsu Corp., model S9227) arranged vertically either side of the system optical axis. (Note that the final cylindrical lenses 40, 42 are designed to vertically compress the scattering pattern image and hence increase the range of azimuthal scattering angles covered by each CMOS array). The scattered light 28 is directed onto the two linear 512 pixel CMOS arrays 36, 38 without loss of information relating to the spatial distribution of the intensity of the light scattered by the particle.

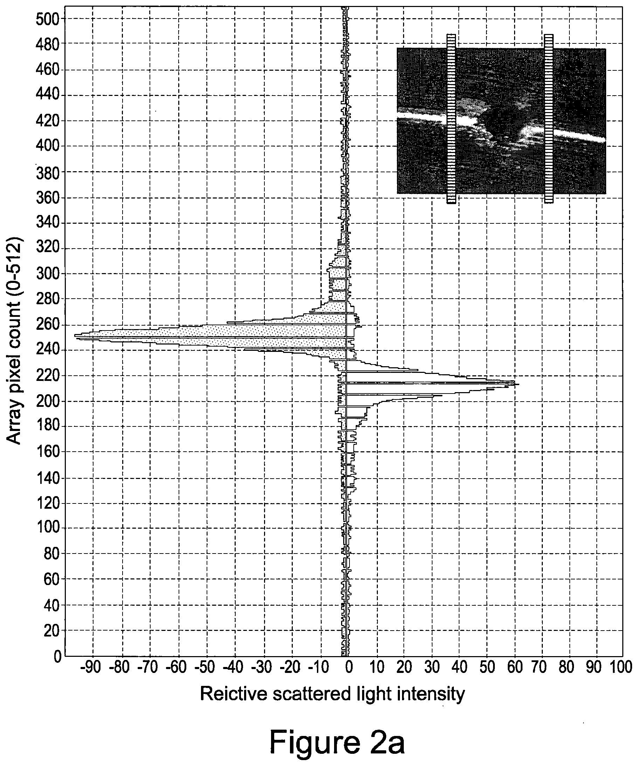

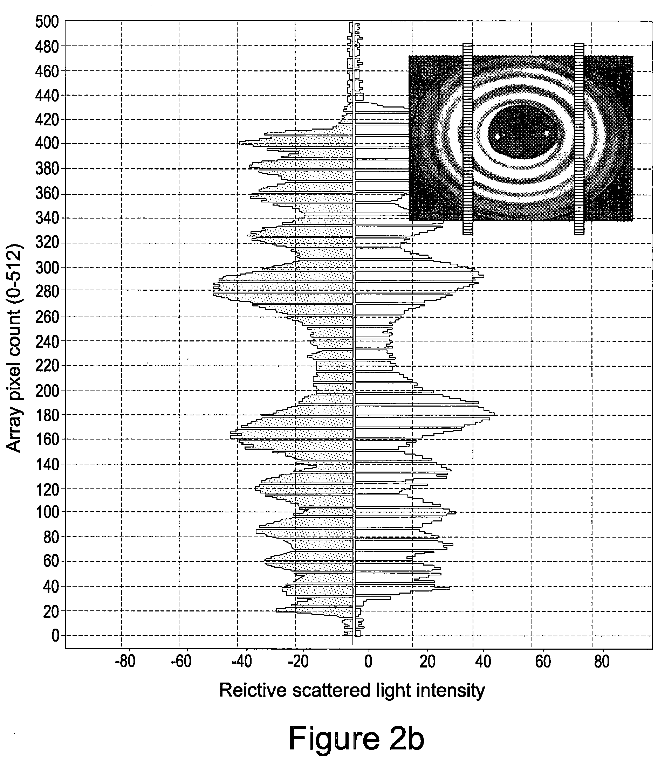

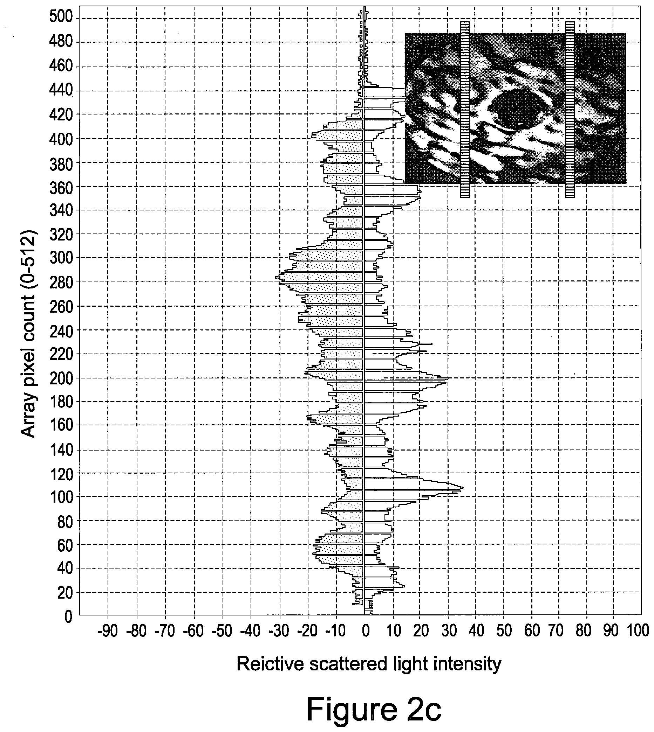

Figures 2a, 2b and 2c illustrate three examples of experimental CMOS array data recorded from individual airborne using the single beam apparatus 10 that does not form part of the present invention. The particles were in this case a fibre (Figure 2a), a water droplet (Figure 2b), and an irregular shaped silica dust grain (Figure 2c). In each case, the vertical axis covers the 512 array pixels and the horizontal axes either side of the centreline show the relative scattered light intensity recorded by each array. The inset images are for illustration only and show the relative positions of the arrays 36, 38 superimposed on the type of scattering patterns (here recorded using an intensified CCD camera) that would produce the given array responses.

The distinctive linear scattering from a fibre, exhibiting a dominant single peak in each array, provides a powerful means of discriminating fibres from other non-fibrous particles. Furthermore, the relative positions of the peaks can be used to determine the orientation angle of the fibre (in the plane orthogonal to the laser beam), a critical requirement for our asbestos detection strategy. (Note that if the fibre is also tilted out of the plane orthogonal to the laser beam, the transfer properties of the lens system used to capture the scattered light results in both peaks exhibiting the same vertical offset. Since it is the relative positions of the peaks that are of importance, such 'global' offsets are of little consequence). In contrast to fibre scattering, a spherical droplet passing through the laser beam (Figure 2b) produces a scattering pattern comprising concentric rings; the CMOS linear arrays intersecting these rings reflect this symmetry. Similarly, an irregular shaped dust particle (Figure 2c) produces array outputs that no distinctive peaks or symmetry.

A fast and computationally efficient method of discriminating between fibre and non-fibre particles has been implemented by simply evaluating the ratio of the peak intensity value in each array to the mean intensity of all pixels in that array ('peak-to-mean', or PTM). In the examples given in Figures 2a, 2b and 2c, the average PTM values were 11.1, 2.2, and 3.1 for the fibre, droplet, and dust grain respectively. Experimental evidence has indicated that using a PTM of ∼10 is sufficient to differentiate more than 90% of fibres present in a sample airflow.

Once a fibre has been identified, further processing of the array data can establish the angle of orientation of the fibre at the moment it passed through the laser beam. This angle is related non-linearly to the separation (measured in pixels) of the scattering peaks on the two arrays. Both fibre discrimination and fibre orientation angle can be determined in the Single-beam system for particle throughputs approaching 600 particles/s.

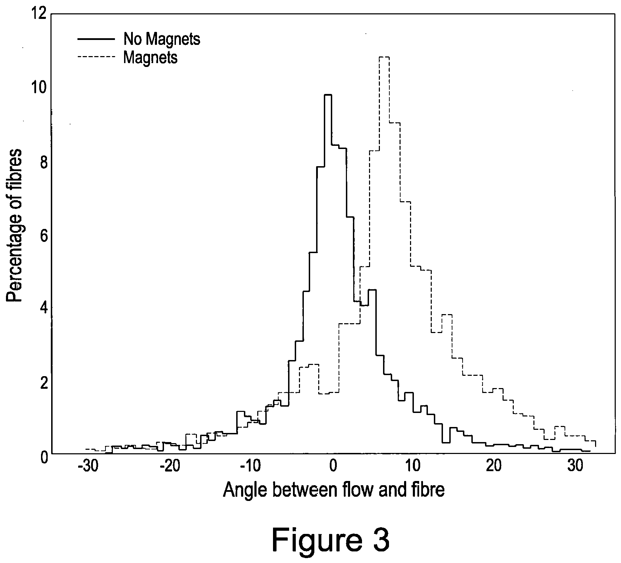

Figure 3 shows experimental laboratory results recorded from an aerosol of crocidolite asbestos fibres both with and without the influence of the magnetic field that does not form part of the present invention. The asbestos used was UICC (Union Internationale Contre le Cancer) standard respirable asbestos, the aerosol being generated into a doubly-sealed container by compressed air, from which the sample was drawn. The peak on the left side of Figure 3 shows the distribution of fibre orientation angles for more than 2,000 fibres with no magnetic field present. The parabolic flow profile in the delivery tube results in over 86% of fibres lying at an angle less than 10° to the airflow axis, although the range of angles naturally adopted by the fibres in the flow extended to about +/- 30°. The peak on the right side of Figure 3 shows the fibre angle distribution for a similar number of fibres of the same asbestos material but with the magnets present. The distribution has been moved through approximately 7° to the right (corresponding to a rotation of the fibres towards the magnetic field direction). This rotation compared well with predicted values based on the airflow velocity at the laser beam (8 ms-1 +/- 0.5 ms-1) and the measured field strength between the magnets of 0.26 T.

Results such as those in Figure 3 were repeated for different aerosols of both asbestos and non-asbestos fibres. These confirmed that if a fibre was detected with an angle of orientation greater than +20°, the probability of the fibre being asbestos was approximately 6 times higher than the probability it being a non-asbestos fibre that, by chance, had attained that angle of orientation. This meant that in a 'real-world' measurement situation such as a demolition site, if the concentration of non-asbestos fibres was comparable to or lower than that of the asbestos fibres, positive detection of the asbestos could be achieved with relatively few fibre measurements (∼10-20, see below). However, if the concentration of non-asbestos fibres exceeded that of asbestos fibres, the confidence with which a fibre measured at >20° orientation could be deemed 'asbestos' would be accordingly reduced, leading to an undesirable risk of false-positive asbestos detection.

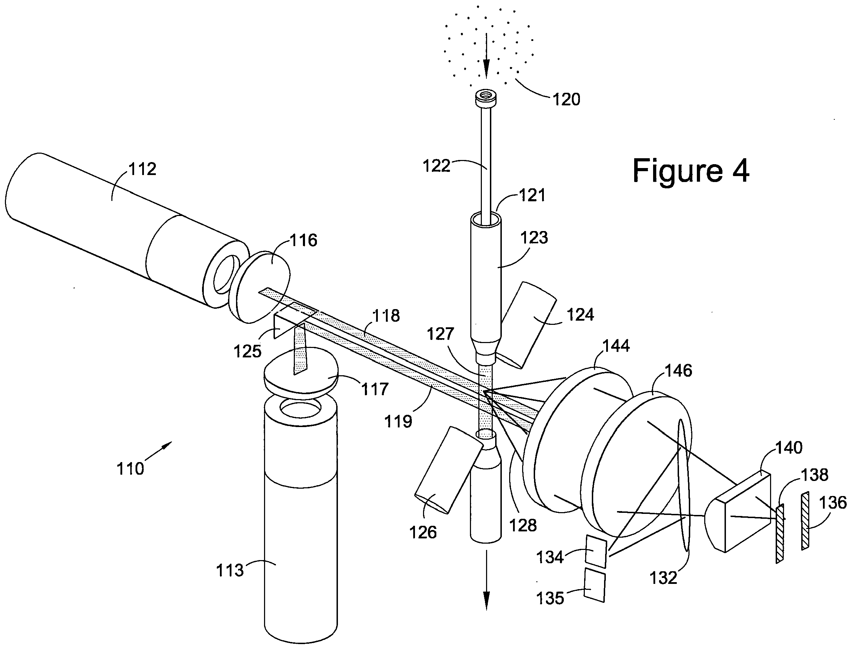

Figure 4 illustrates an asbestos detection apparatus 110 that uses a dual beam that does not form part of the present invention.

The performance of the single beam system could be limited because the initial orientation of each fibre before it entered the magnetic field, although distributed around the airflow axis, was not accurately known. What is required, therefore, is an accurate knowledge of both the initial orientation of the fibre before it enters the field and the final orientation on exiting the field. The dual beam system shown in Figure 4 implements these measurements and allows the absolute change in fibre orientation to be measured for each individual fibre passing through the system.

The beams from two 30 mW 658 nm diode laser modules 112, 113 (Prophotonix Inc., Salem, NH) are each focused using lenses 116, 117 to elliptical cross sections 118, 119. In the embodiment illustrated the beams 118, 119 are originally perpendicular, and then one of the beams 119 is reflected using front-silvered prism 125 such that beams 118 and 119 become parallel. The two beams 118, 119 are arranged symmetrically above and below the optical axis of the system, separated by a distance of about 3 mm. Initially, the sample airflow column 127 between the beams is permeated by the magnetic field, created by magnets 124, 126, at 45° to the airflow axis, in the plane orthogonal to the system optical axis. The beam separation of about 3 mm is a compromise between (a) the desire to retain a single optical detection system with acceptably low aberrations, and (b) the need for fibres carried in the sample airflow to be exposed to the magnetic field for sufficient time to induce re-orientation of asbestos fibres, known to be ∼ 0.5 - 3 ms for the field strength employed.

Light 128 scattered by the particle in the forward direction at scattering angles between 5° and 20° to the beam axis is collected by a first lens 140 and a second lens 142, with the main laser beam 118 being absorbed by a beam-dump 130 as shown. About 8% of the collected scattered light is reflected by a pellicle beam-splitter 132 onto two photodiode trigger detectors 134, 135 (one for each beam).

In another improvement over the single beam system, the dual beam system employs a 'sheathed' airflow regime in which the particle-laden sample air 120 which is passed through steel tube 122 is surrounded by a relatively wide laminar sheath of particle-free air 121 which is contained in sheath 123 travelling at the same velocity. This significantly reduces aerodynamic shear forces on the fibres and virtually eliminates air-flow induced orientation changes during their transit between the beams. Any fibre reorientation during this transit can therefore be correctly attributed to the influence of the magnetic field alone.

The two photodiode trigger detectors 134, 135 are used in the Dual-beam system, allowing 'tracking' of individual particles through the system even when the particle concentration reaches a point where more than one particle may be present between the beams at the same time. The transmitted portion of the scattered light falls onto two linear CMOS arrays 136, 138 arranged vertically either side of the system optical axis. (Note that the final cylindrical lenses 140, 142 are designed to vertically compress the scattering pattern image and hence increase the range of azimuthal scattering angles covered by each CMOS array). The scattered light 128 is directed onto the two linear CMOS arrays 136, 138 without loss of information relating to the spatial distribution of the intensity of the light scattered by the particle. As in the single beam system, discrimination of fibres from all other particle types is achieved by PTM (Peak-to-Mean) analysis of the CMOS array data provided by the two linear 512 pixel CMOS arrays 136, 138, when the particle crosses the first beam. If a particle passing through the first beam is, from this test, deemed to be a fibre, then the orientation of the fibre when it passed through the first beam and again when it passes through the second beam are evaluated, from which the change of fibre orientation due to the field is determined.

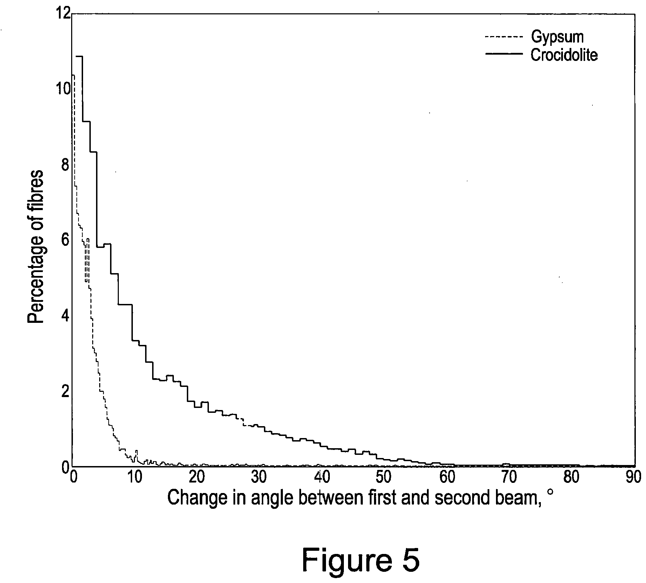

Figure 5 illustrates the performance of the Dual-beam system that does not form part of the present invention. It shows laboratory data for the change in orientation angle (in degrees) of fibres of crocidolite asbestos and gypsum (a common less-harmful fibrous material used in building fabrics) during the transit of the fibres between the upper and lower laser beams. For the gypsum fibres, unaffected by the magnetic field, only 0.7% of the fibres experienced an orientation change of greater than 20º (this being therefore due to random statistical chance). In contrast, 26% the crocidolite fibres experienced a rotation of 20º or more.

Figure 5 indicates that if a fibre exhibits a measured rotation of more than 20°, the probability of it being asbestos is approximately 37 times higher than it being non-asbestos. However, while it is tempting to assume therefore that even a single fibre measurement can yield a strong indication of asbestos presence, it is, of course, ultimately dependent on the relative concentrations of asbestos fibres to non-asbestos fibres. If the latter are far more abundant, the probability of detecting a fibre from that population that has randomly achieved a >20° rotation will be similarly enhanced.

We have carried out extensive statistical analyses of experimental data of the type shown in Figure 5 to estimate the limits of asbestos detection sensitivity for the dual beam system. It shows that, in the presence of other non-asbestos fibres, such as gypsum or glass, crocidolite asbestos fibres can be detected with greater than 99% confidence provided that these asbestos fibres make up at least ∼12% of the total fibre population. So, for example, a 99% confidence detection of crocidolite asbestos could be achieved in a case where, say, 10,000 airborne particles were measured, of which 100 were non-asbestos fibres and 12 were crocidolite. (Note that the non-fibre particles are rejected at an early stage of processing by the Peak-to-Mean test described previously). Depending on the concentration of asbestos fibres present, this level of detection could be achieved within a few seconds of measurement. If only crocidolite asbestos fibres are present (no other types of fibres present), a positive detection of asbestos could be made with as few as 5 to 10 individual fibre measurements.

Similar statistical analyses of data from chrysotile asbestos, which exhibits a lower paramagnetic moment and therefore a lower rate of rotation in the magnetic field, indicates that for a 99% confidence detection, the chrysotile fibres should make up at least ∼50% of the total fibre population present. If only chrysotile is present, then a 99% confidence detection can be achieved with typically 30-40 individual fibre measurements.

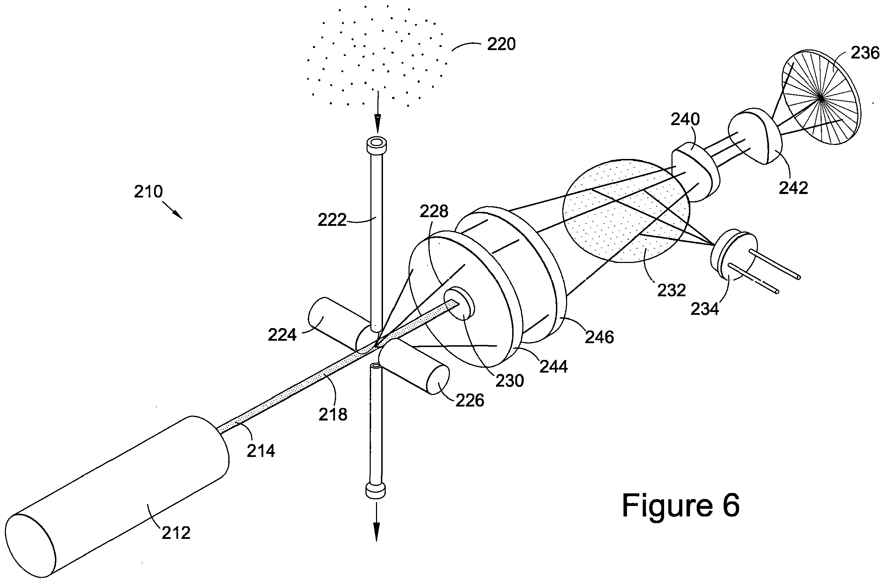

Further laboratory studies have indicated that a further improvement in asbestos detection sensitivity can be achieved by placing the magnets at 90° to the airflow rather than 45° as illustrated in Figures 6, 7, 8 and 9 in accordance with the present invention. This is counter-intuitive given that asbestos fibres entering the magnetic field region are predominantly vertically aligned and should experience no magnetic torque in a field orthogonal to their orientation. However, we believe the improvement offered by this configuration results from two factors. Firstly, while the field between two horizontally opposed magnets is indeed uniformly horizontal, the field above and below the magnets is not (instead it arcs away from the horizontal and loops back to the outermost magnetic poles). Therefore, vertically aligned fibres are likely to experience field at a range of angles and be rotated from vertical even before reaching the primary measurement space between the two laser beams where the field is horizontal. Secondly, when lying at 90° to the airflow axis, the magnets can be positioned much closer together without disturbing the airflow between them, resulting in a significant increase in the magnetic field strength (from ∼0.26 T to 0.55 T) experienced by the fibres. This in turn increases the torque on the fibres and therefore the degree of angular rotation they exhibit.

Figure 6 illustrates an asbestos detection apparatus 210 that uses a single beam and the magnetic field perpendicular to the airflow in accordance with the present invention.

The beam 214 from laser module 212 is focused using a lens 216 to an elliptical cross-section 18, approximately 3 mm wide and 0.1 mm deep, at the intersection with a sample airflow carrying suspended particles 220 from the ambient environment. The parabolic laminar flow-profile set up within the stainless steel tube 222 carrying this airflow has the effect of preferentially aligning elongated particles, such as fibres, axially with the flow. Set immediately above the intersection of beam and airflow are two high-strength magnets 224, 226, arranged such that the field between them is at 90° to the axis of the airflow.

Light 228 scattered by the particle in the forward direction at scattering angles between 5° and 20° to the beam axis is collected by a first lens 240 and a second lens 242, with the main laser beam being absorbed by a beam-dump 230 as shown. About 8% of the collected scattered light is reflected by a pellicle beam-splitter 232 onto a photodiode detector 234. The amplified signal from this detector 234 is used both to assess particle size and to act as a 'particle detection' trigger for the subsequent system electronics.

The transmitted portion of the scattered light falls onto a radial detector array 236 comprising a photosensitive array containing one or more annual photodetector rings. The rings are concentric if more than one ring is present. At least one of the rings is divided into segments, each segment giving output proportional to the power of the light falling on it. In one alternative configuration two or more rings are divided into segments and the interfaces between segments on one of these rings are placed at azimuth angles which are out of phase with the angular positions of the interfaces on another one of the rings. This phase difference eliminates the possibility of fine scattering from an elongated particle being undetected in the event that it falls on the interface between two adjacent segments ("dead zone"). In an alternative configuration the detector array also possesses an inner ring the output from which is proportional to all the scattered light falling on it. Therefore, it need not be (but can be) divided into segments. As such it will receive scattered light no matter what the orientation of the scattering particle and it can be used for triggering the system and for particle sizing. The scattered light 228 is directed onto the radial detector array 236 without loss of information relating to the spatial distribution of the intensity of the light scattered by the particle.

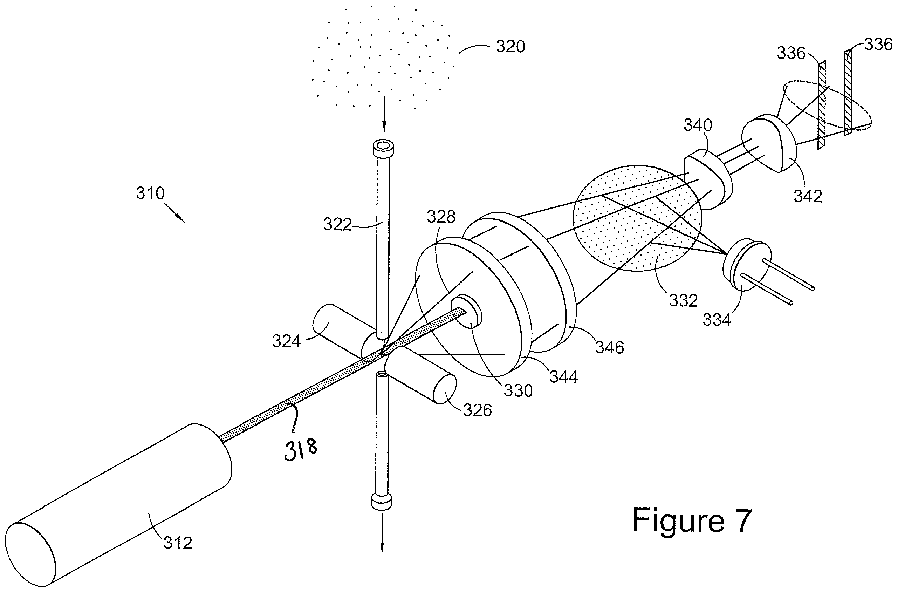

Figure 7 illustrates an alternate asbestos detection apparatus 310 that uses a single beam and the magnetic field perpendicular to the airflow in accordance with the present invention.

The beam 314 laser module 312 is focused using a lens 316 to an elliptical cross-section 318, approximately 3 mm wide and 0.1 mm deep, at the intersection with a sample airflow carrying suspended particles 320 from the ambient environment. The parabolic laminar flow-profile set up within the stainless steel tube 322 carrying this airflow has the effect of preferentially aligning elongated particles, such as fibres, axially with the flow. Set immediately above the intersection of beam and airflow are two high-strength magnets 324, 326, arranged such that the field between them is at 90° to the axis of the airflow.

Light 328 scattered by the particle in the forward direction at scattering angles between 5° and 20° to the beam axis is collected by a first lens 340 and a second lens 342, with the main laser beam being absorbed by a beam-dump 330 as shown. About 8% of the collected scattered light is reflected by a pellicle beam-splitter 332 onto a photodiode detector 334. The amplified signal from this detector 334 is used both to assess particle size and to act as a 'particle detection' trigger for the subsequent system electronics. The transmitted portion of the scattered light falls onto two linear CMOS arrays 336, 338 arranged vertically either side of the system optical axis. (Note that the final cylindrical lenses 340, 342 are designed to vertically compress the scattering pattern image and hence increase the range of azimuthal scattering angles covered by each CMOS array). The scattered light 328 is directed onto the two linear CMOS arrays 336, 338 without loss of information relating to the spatial distribution of the intensity of the light scattered by the particle.

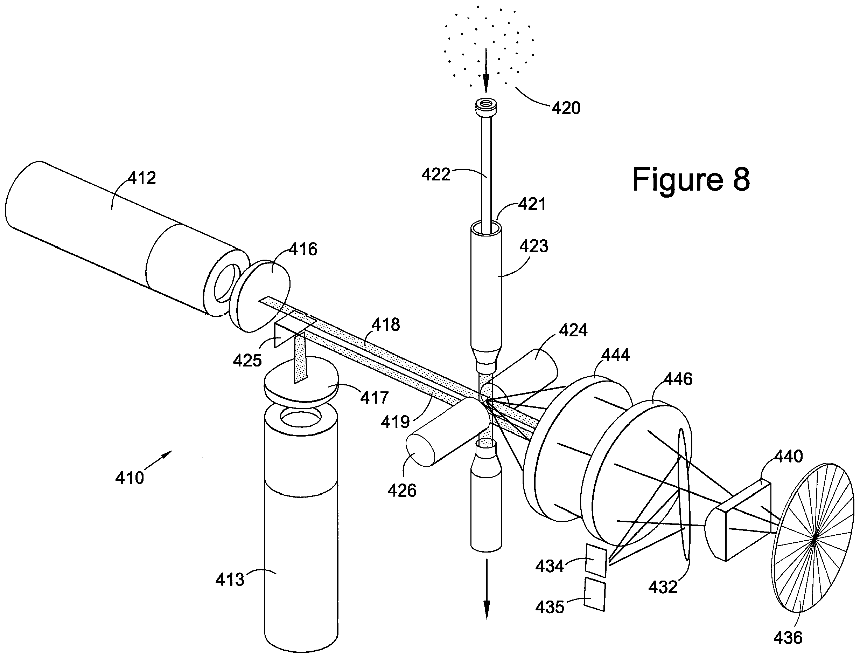

Figure 8 illustrates an asbestos detection apparatus 410 that uses a dual beam and the magnetic field perpendicular to the airflow in accordance with the present invention.

The beams from two laser modules 412, 413 are each focused using lens 416, 417 to elliptical cross sections 418, 419. In the embodiment illustrated the beams 418, 419 are originally perpendicular, and then one of the beams 419 is reflected using lens 425 by employing total internal reflection such that beams 418 and 419 are parallel. The two laser beams 418, 419 are arranged symmetrically above and below the optical axis of the system, separated by a distance of about 3 mm. Initially, the sample airflow column 427 between the beams is permeated by the magnetic field, created by magnets 424, 426, at 90° to the airflow axis, in the plane orthogonal to the system optical axis. The beam separation of about 3 mm is a compromise between (a) the desire to retain a single optical detection system with acceptably low aberrations, and (b) the need for fibres carried in the sample airflow to be exposed to the magnetic field for sufficient time to induce re-orientation of asbestos fibres, known to be ∼ 0.5 - 3 ms.

The dual beam system employs a 'sheathed' airflow regime in which the particle-laden sample air 420 which is passed through steel tube 422 is surrounded by a relatively wide laminar sheath of particle-free air 421 which is contained in sheath 423 travelling at the same velocity. This significantly reduces aerodynamic shear forces on the fibres and virtually eliminates air-flow induced orientation changes during their transit between the beams. Any fibre reorientation during this transit can therefore be correctly attributed to the influence of the magnetic field alone.

Light 428 scattered by the particle in the forward direction at scattering angles between 5° and 20° to the beam axis is collected by a first lens 440 and a second lens 442, with the main laser beam 418 being absorbed by a beam-dump 430 as shown. About 8% of the collected scattered light is reflected by a pellicle beam-splitter 432 onto two photodiode trigger detectors 434, 435 (one for each beam). The two photodiode trigger detectors 434, 435 are used in the dual beam system, allowing 'tracking' of individual particles through the system even when the particle concentration reaches a point where more than one particle may be present between the beams at the same time.

As in single beam system illustrated in Figure 6, a radial detector array 436 comprising a photosensitive array containing one or more annual photodetector rings is used to determine fibre angle when the fibre passes through each of the beams.

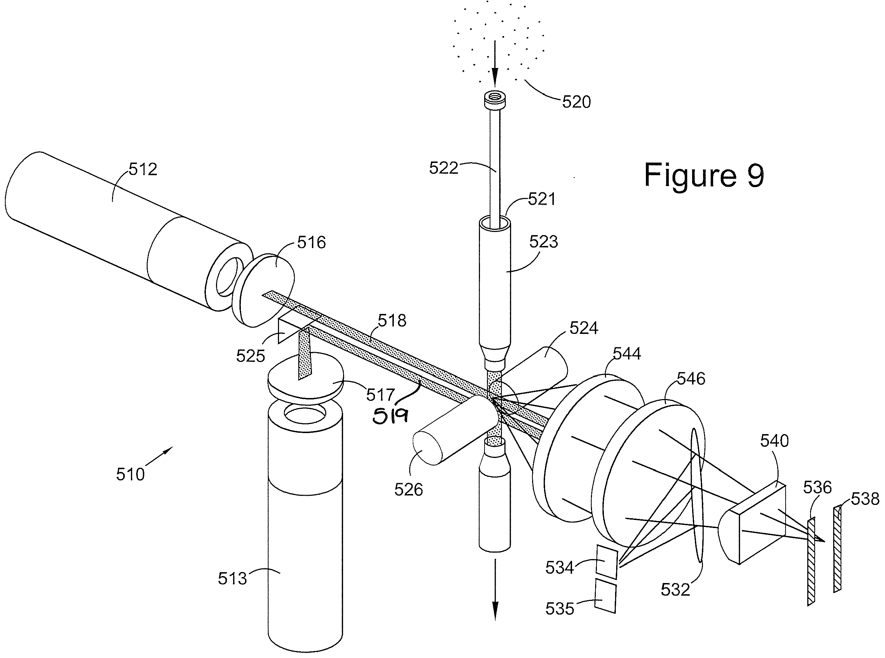

Figure 9 illustrates an alternate asbestos detection apparatus 510 that uses a dual beam and the magnetic field perpendicular to the airflow in accordance with the present invention.

The beams from two laser modules 512, 513 are each focused using lens 516, 517 to elliptical cross sections 518, 519. In the embodiment illustrated the beams 518, 519 are originally perpendicular, and then one of the beams 519 is reflected using front silvered prism 525 such that beams 518 and 519 are parallel. The two laser beams 518, 519 are arranged symmetrically above and below the optical axis of the system, separated by a distance of about 3 mm. Initially, the sample airflow column 527 between the beams is permeated by the magnetic field, created by magnets 524, 526, at 90° to the airflow axis, in the plane orthogonal to the system optical axis. The beam separation of about 3 mm is a compromise between (a) the desire to retain a single optical detection system with acceptably low aberrations, and (b) the need for fibres carried in the sample airflow to be exposed to the magnetic field for sufficient time to induce re-orientation of asbestos fibres, known to be ∼ 0.5 - 3 ms.

The dual beam system employs a 'sheathed' airflow regime in which the particle-laden sample air 520 which is passed through steel tube 522 is surrounded by a relatively wide laminar sheath of particle-free air 521 which is contained in sheath 523 travelling at the same velocity. This significantly reduces aerodynamic shear forces on the fibres and virtually eliminates air-flow induced orientation changes during their transit between the beams. Any fibre reorientation during this transit can therefore be correctly attributed to the influence of the magnetic field alone.

Light 528 scattered by the particle in the forward direction at scattering angles between 5° and 20° to the beam axis is collected by a first lens 540 and a second lens 542, with the main laser beam 518 being absorbed by a beam-dump 530 as shown. About 8% of the collected scattered light is reflected by a pellicle beam-splitter 532 onto two photodiode trigger detectors 534, 535 (one for each beam).

Finally, two photodiode trigger detectors 534, 535 (one for each beam) are used in the dual beam system, allowing 'tracking' of individual particles through the system even when the particle concentration reaches a point where more than one particle may be present between the beams at the same time. The transmitted portion of the scattered light falls onto two linear CMOS arrays 536, 538 arranged vertically either side of the system optical axis. (Note that the final cylindrical lenses 540, 542 are designed to vertically compress the scattering pattern image and hence increase the range of azimuthal scattering angles covered by each CMOS array). The scattered light 528 is directed onto the two linear CMOS arrays 536, 538 without loss of information relating to the spatial distribution of the intensity of the light scattered by the particle. As in single beam system illustrated in Figure 7, discrimination of fibres from all other particle types is achieved by PTM (Peak-to-Mean) analysis of the CMOS array data provided by the two linear CMOS arrays 536, 538 when the particle crosses the first beam. If a particle passing through the first beam is, from this test, deemed to be a fibre, then the orientation of the fibre when it passed through the first beam and again when it passes through the second beam are evaluated, from which the change of fibre orientation due to the magnetic field is determined.

## Claims

1. A fibre detector assembly (210, 310, 410, 510) comprising:
(i) a scattering chamber body;
(ii) means (222, 322, 422, 522) for drawing particles (220, 320, 420, 520) through said body chamber in the form of a particle stream, said means being adapted such that the particles (220, 320, 420, 520) tend to travel in single file with the longitudinal axis of particles with elongate shape substantially aligned with the direction of the flow;
(iii) means (113, 212, 312, 412, 413, 512, 513) for illuminating the particle stream within the chamber body;
(iv) an optical detector (236, 336, 338, 436, 536, 538) adapted to intercept and collect a portion of the light scattered by particles (220, 320, 420, 520) passing through the illuminating beam (218, 318, 418, 419, 518, 519);
(v) data processing means adapted to capture and process the signals from the optical detector (236, 336, 338, 436, 536, 538);
**characterized in that** the assembly further comprises a single pair of permanent magnets (224, 226, 324, 326, 424, 426, 524, 526) for applying a magnetic field across the particle stream, the magnetic field lines of the magnetic field being perpendicular to the direction of the particle stream, and wherein the single pair of permanent magnets (224, 226, 324, 326, 424, 426, 524, 526) generates, in use, a constant magnetic field.

2. A fibre detector assembly according to Claim 1 wherein the assembly is further adapted to collect a portion of the scattered light scattered by particles at the region of entry of the particle stream into the magnetic field and from another region located where the stream has crossed a substantial part of the magnetic field.

3. A fibre detector assembly according to Claim 2 wherein the scattered light is detected by at least two optical detectors (336, 338, 536, 538).

4. A fibre detector assembly according to Claim 2 or 3 wherein the illuminating means (412, 413, 512, 513) comprises at least two beams of light (418, 419, 518, 519).

5. A fibre detector assembly according to Claim 4 wherein the beams are derived from a single beam by means of reflection after the single beam has passed the particle stream.

6. A fibre detector assembly according to Claim 3, 4 or 5 wherein the portions of the light scattered by the particles are collected by one optical element (344, 544) and directed towards separate optical detectors (336, 338, 536, 538).

7. A fibre detector assembly according to Claim 4 or 5 wherein the portions of the light scattered by the particles are collected by separate optical elements and directed towards separate optical detectors.

8. A fibre detector assembly as claimed in any preceding claim wherein the detector comprises one or more concentric annular rings of detector elements (236, 436).

9. A fibre detector as claimed in any of Claims 1 to 7 wherein the optical detector comprises a linear detector array (336, 338, 536, 538).

10. A fibre detector as claimed in Claim 9 wherein the optical detector comprises dual linear detector arrays (336, 338, 536, 538).

11. A fibre detector as claimed in Claim 9 or Claim 10 wherein the linear detector array (336, 338, 536, 538) comprises a linear CMOS detector array.

12. A fibre detector as claimed in any preceding claim further comprising a trigger detector (234, 334, 434, 435) configured to activate the optical detector (236, 336, 338, 436) when the trigger detector detects light has been scattered by the particles passing through the illuminating beam (318, 418, 419, 518, 519).

13. A fibre detector as claimed in any preceding claim further comprising a means (423) for providing a sheath of particle free air (421) around the particle stream.

## Patentansprüche

1. Faserdetektionsanordnung (210, 310, 410, 510), umfassend:
(i) einen Streukammerkörper;
(ii) Mittel (222, 322, 422, 522) zum Ziehen von Partikeln (220, 320, 420, 520) durch den Kammerkörper in Form eines Partikelstroms, wobei das Mittel so angepasst ist, dass sich die Partikel (220, 320, 420, 520) tendenziell in einer einzelnen Reihe bewegen, wobei die Längsachse der Partikel mit länglicher Form im Wesentlichen auf die Stromrichtung ausgerichtet ist;
(iii) Mittel (113, 212, 312, 412, 413, 512, 513) zum Beleuchten des Partikelstroms innerhalb des Kammerkörpers;
(iv) einen optischen Detektor (236, 336, 338, 436, 536, 538), der angepasst ist, um einen Teil des durch die Partikel (220, 320, 420, 520), die durch den Beleuchtungsstrahl (218, 318, 418, 419, 518, 519) laufen, gestreuten Lichts abzufangen und zu sammeln;
(v) Datenverarbeitungsmittel, das angepasst ist, um die Signale vom optischen Detektor (236, 336, 338, 436, 536, 538) zu erfassen und zu verarbeiten;
**dadurch gekennzeichnet, dass** die Anordnung ferner ein einzelnes Paar Permanentmagneten (224, 226, 324, 326, 424, 426, 524, 526) zum Anlegen eines Magnetfelds über den Partikelstrom umfasst, wobei die Magnetfeldlinien des Magnetfelds rechtwinklig zur Richtung des Partikelstroms sind, und wobei das einzelne Paar Permanentmagneten (224, 226, 324, 326, 424, 426, 524, 526) in Gebrauch ein konstantes Magnetfeld generiert.

2. Faserdetektionsanordnung nach Anspruch 1, wobei die Anordnung ferner angepasst ist, um einen Teil des gestreuten Lichts, das durch Partikel an der Eintrittsregion des Partikelstroms in das Magnetfeld gestreut wird, und von einer anderen Region zu sammeln, die sich dort befindet, wo der Strom einen wesentlichen Teil des Magnetfelds überquert hat.

3. Faserdetektionsanordnung nach Anspruch 2, wobei das gestreute Licht von mindestens zwei optischen Detektoren (336, 338, 536, 538) detektiert wird.

4. Faserdetektionsanordnung nach Anspruch 2 oder 3, wobei das Beleuchtungsmittel (412, 413, 512, 513) mindestens zwei Lichtstrahlen (418, 419, 518, 519) umfasst.

5. Faserdetektionsanordnung nach Anspruch 4, wobei die Strahlen mittels Reflexion von einem einzelnen Strahl abgeleitet werden, nachdem der einzelne Strahl den Partikelstrom durchlaufen hat.

6. Faserdetektionsanordnung nach Anspruch 3, 4 oder 5, wobei die Teile des durch die Partikel gestreuten Lichts durch ein optisches Element (344, 544) gesammelt und zu separaten optischen Detektoren (336, 338, 536, 538) geleitet werden.

7. Faserdetektionsanordnung nach Anspruch 4 oder 5, wobei die Teile des durch die Partikel gestreuten Lichts durch separate optische Elemente gesammelt und zu separaten optischen Detektoren geleitet werden.

8. Faserdetektionsanordnung nach einem der vorstehenden Ansprüche, wobei der Detektor einen oder mehrere konzentrische ringförmige Ringe aus Detektorelementen (236, 436) umfasst.

9. Faserdetektor nach einem der Ansprüche 1 bis 7, wobei der optische Detektor ein lineares Detektorarray (336, 338, 536, 538) umfasst.

10. Faserdetektor nach Anspruch 9, wobei der optische Detektor duale lineare Detektorarrays (336, 338, 536, 538) umfasst.

11. Faserdetektor nach Anspruch 9 oder Anspruch 10, wobei das lineare Detektorarray (336, 338, 536, 538) ein lineares CMOS-Detektorarray umfasst.

12. Faserdetektor nach einem der vorstehenden Ansprüche, ferner umfassend einen Auslösedetektor (234, 334, 434, 435), der konfiguriert ist, um den optischen Detektor (236, 336, 338, 436) zu aktivieren, wenn der Auslösedetektor Licht detektiert, das von den den Beleuchtungsstrahl (318, 418, 419, 518, 519) durchlaufenden Partikel gestreut wurde.

13. Faserdetektor nach einem der vorstehenden Ansprüche, ferner umfassend ein Mittel (423) zum Bereitstellen einer Hülle partikelfreier Luft (421) um den Partikelstrom.

## Revendications

1. Ensemble détecteur de fibre (210, 310, 410, 510) comprenant :
(i) un corps de chambre de diffusion ;
(ii) un moyen (222, 322, 422, 522) d'aspiration de particules (220, 320, 420, 520) à travers ledit corps de chambre sous la forme d'un courant de particules, ledit moyen étant adapté de manière à ce que les particules (220, 320, 420, 520) tendent à se déplacer dans une file unique avec l'axe longitudinal des particules de forme allongée sensiblement aligné avec la direction du flux ;
(iii) un moyen (113, 212, 312, 412, 413, 512, 513) d'illumination du courant de particules à l'intérieur du corps de chambre ;
(iv) un détecteur optique (236, 336, 338, 436, 536, 538) adapté pour intercepter et collecter une partie de la lumière diffusée par des particules (220, 320, 420, 520) traversant le faisceau d'illumination (218, 318, 418, 419, 518, 519) ;
(v) un moyen de traitement de données adapté pour capturer et traiter les signaux depuis le détecteur optique (236, 336, 338, 436, 536, 538) ;
**caractérisé en ce que** l'ensemble comprend en outre une paire unique d'aimants permanents (224, 226, 324, 326, 424, 426, 524, 526) destinés à appliquer un champ magnétique à travers le courant de particules, les lignes de champ magnétique du champ magnétique étant perpendiculaires à la direction du courant de particules, et dans lequel la paire unique d'aimants permanents (224, 226, 324, 326, 424, 426, 524, 526) génère, en utilisation, un champ magnétique constant.

2. Ensemble détecteur de fibre selon la revendication 1, dans lequel l'ensemble est en outre adapté pour collecter une partie de la lumière diffusée diffusée par des particules au niveau de la zone d'entrée du courant de particules dans le champ magnétique et depuis une autre zone située là où le courant croise une partie sensible du champ magnétique.

3. Ensemble détecteur de fibre selon la revendication 2, dans lequel la lumière diffusée est détectée par au moins deux détecteurs optiques (336, 338, 536, 538).

4. Ensemble détecteur de fibre selon la revendication 2 ou 3, dans lequel le moyen d'illumination (412, 413, 512, 513) comprend au moins deux faisceaux de lumière (418, 419, 518, 519).

5. Ensemble détecteur de fibre selon la revendication 4, dans lequel les faisceaux sont dérivés d'un faisceau unique au moyen d'une réflexion après que le faisceau unique a traversé le courant de particules.

6. Ensemble détecteur de fibre selon la revendication 3, 4 ou 5, dans lequel les parties de la lumière diffusée par les particules sont collectées par un élément optique (344, 544) et dirigées vers des détecteurs optiques séparés (336, 338, 536, 538).

7. Ensemble détecteur de fibre selon la revendication 4 ou 5, dans lequel les parties de la lumière diffusée par les particules sont collectées par des éléments optiques séparés et dirigées vers des détecteurs optiques séparés.

8. Ensemble détecteur de fibre selon l'une quelconque des revendications précédentes, dans lequel le détecteur comprend une ou plusieurs bagues annulaires concentriques d'éléments de détecteur (236, 436).

9. Ensemble détecteur de fibre selon l'une quelconque des revendications 1 à 7, dans lequel le détecteur optique comprend un réseau de détecteurs linéaires (336, 338, 536, 538).

10. Détecteur de fibre selon la revendication 9, dans lequel le détecteur optique comprend des réseaux de détecteurs linéaires doubles (336, 338, 536, 538).

11. Détecteur de fibre selon la revendication 9 ou 10, dans lequel le réseau de détecteurs linéaires (336, 338, 536, 538) comprend un réseau de détecteurs CMOS linéaires.

12. Détecteur de fibre selon l'une quelconque des revendications précédentes, comprenant en outre un détecteur de déclenchement (234, 334, 434, 435) configuré pour activer le détecteur optique (236, 336, 338, 436) quand le détecteur de déclenchement détecte qu'une lumière a été diffusée par les particules traversant le faisceau d'illumination (318, 418, 419, 518, 519).

13. Détecteur de fibre selon l'une quelconque des revendications précédentes, comprenant en outre un moyen (423) de fourniture d'une gaine d'air exempt de particule (421) autour du courant de particule.
